# EUROPEAN PATENT SPECIFICATION

(11) **EP 4 185 095 B1**
(45) Date of publication and mention of the grant of the patent: **01.10.2025**
(21) Application number: 21769493.4
(22) Date of filing: 26.07.2021
(51) Int. Cl.: A01B 1/06

(54) **APPARATUS AND METHOD FOR TILLING EARTH**
GERÄT UND VERFAHREN ZUR BODENBEARBEITUNG
APPAREIL ET MÉTHODE DE DE TRAVAIL DU SOL

(30) Priority: 24.07.2020 GB 202011468
(43) Date of publication of application: 31.05.2023
(73) Proprietor: Williams, John Gary, Northwich Cheshire CW9 8XQ (GB)
(72) Inventor: Williams, John Gary, Northwich Cheshire CW9 8XQ (GB)
(74) Representative: Mohun, Stephen John
(86) International application number: PCT/GB2021/051916
(87) International publication number: WO 2022/018463

(56) References cited:
- DE-A1- 10 105 913
- FR-A2- 2 546 706
- US-A- 1 624 610
- US-A- 3 710 870
- US-A- 4 452 316
- US-A- 4 811 794
- US-A1- 2013 087 352
- US-B1- 6 904 976

## Description

The present invention relates to an apparatus and method for tilling and is concerned particularly with a hand-held apparatus for tilling the ground.

### BACKGROUND

Tilling earth, such as soil in a garden, agitates the earth and may help to kill weeds, aerate the earth, and level the surface. Tilling earth may prepare the earth to make a good seedbed for planting seeds. Small-scale tilling, such as is done by gardeners, is often done by hand using non-powered tools. Manually tilling the earth may be physically tiring and uncomfortable, especially where the earth is compacted, and it is often time-consuming to till an area of earth of any significant size. One type of small-scale, non-powered tilling tool is a handheld tool, such as a fork or a trowel. Using this type of handheld tool often involves a user getting on their hands and knees to reach the area to be tilled which can be tough on the knees. Another type of non-powered tilling tool is a hoe. Using hoe-like implements for tilling can be arduous work and can lead to back injuries or pain. These tilling tools require a user to provide the force to break apart compacted earth. There are examples of powered tilling apparatus in the prior art, but these are often heavy, cumbersome, and sometimes still require a user to provide a manual force to drive the blades into the earth.

US2013/087352 A1 discloses a portable ice chopper assembly having dual reciprocating blades for chopping ice. A gear box assembly is connected to the rotating motor assembly for converting the rotating movement of the motor box assembly into reciprocating movement of the dual chopping blades. Dual reciprocating plungers are connected to and driven by the gear box assembly for driving the plungers in a reciprocating up and down linear movement, wherein the plungers each have respective horizontal actuating bars. The cutting blades move up and down in a linear reciprocating movement, with the two cutting blades moving up and down in an alternating manner to chop the ice.

US6904976 B1 discloses a powered, lightweight soil tillage device, including an elongated hollow support member having a motor and a handle at the upper end thereof and the tillage assembly mounted at the lower end thereof. The tillage assembly comprises a pair of beams which are mounted on opposite sides of a gearbox and driven thereby. The upper ends of the beams are attached to idler or rocker beams so that each of the beams is moved in a generally circular path. How blades or the like are secured to the forward ends of the beams and extend inwardly therefrom so that the hoe blades are disposed one behind the other.

US3710870 A discloses a portable, battery operated tiller adapted to be held in the hand and incorporates a plurality of replaceable digger elements or tines driven through a mechanism which gives the digger elements a motion designed to simulate manual tilling.

US4811794 A discloses a garden tilling apparatus having a frame with moveable arms extending out of the frame and soil-working tines connected to the forward-most portion of the movable arms. Inside the frame, a crankshaft is mounted coupled to the arms and the arms pivotally attached to the frame. A drive mechanism mounted on top of the frame rotates the crankshaft which in turn reciprocates in an elliptical manner to soil-working tines which engage the soil. Handles extend upwardly from the rear of the frame so that one operator may move and use the apparatus to till the soil.

US1624610 A discloses a spading device which is adapted to dig into the earth with due pressure upon the spade members and when undue pressure is applied to the spade members, as when striking a stone, the spade members will be released in such a manner as to prevent the breaking of the device.

DE10105913 A1 discloses a tool or blade for working the ground which rotates back and forth in an oscillatory manner, about a vertical axis.
US4452316 A discloses a power hoe with a power source, two substantially planar hoe blades positioned
FR2546706 A2 discloses

Embodiments of the present invention aim to provide a tilling apparatus and a method of tilling which aim to address the aforementioned problems.

The present invention is defined in the attached independent claims, to which reference should now be made. Further, preferred features may be found in the sub-claims appended thereto.

### SUMMARY OF THE INVENTION

According to one aspect of the present invention, there is provided a hand-held tilling apparatus for tilling earth, the tilling apparatus comprising:
at least two driven tilling blades, each comprising a blade edge and a blade face;
at least one motor for driving the blades in repeated, linear back-and-forth motion, and an elongate handle;
wherein, for at least a part of the back-and-forth motion of the blades, their faces lie
spaced from, and at least partly opposed to, one another, and wherein an angle (α) between the elongate handle and the direction of back and forth motion of the at least two blades is obtuse.

The invention also includes a method of tilling a ground surface using a tilling apparatus according to any statement herein, the method comprising:
activating the motor such that the blades move in a back-and-forth motion;
whereby a portion of a weight of the apparatus is supported by the ground surface and said portion of the weight of the apparatus provides a force to enable the blades to penetrate the ground surface.

In use, the motor may be configured to be positioned further away from a ground surface with which the blades interact than the at least two blades.

The back-and-forth motion of one of the blades may be reciprocal and/or asynchronous with the back-and-forth motion of another of the blades.

The back-and-forth motion may be substantially linear.

The face of one of the blades may be substantially parallel to the face of another of the at least two blades.

The at least two blades may be substantially planar.

The apparatus may further comprise an elongate handle.

An angle between the elongate handle and the direction of back-and-forth motion may be obtuse.

The elongate handle may house a motor and/or a battery.

The apparatus may further comprise a housing wherein the housing may further comprise at least one of a retractable arm, a recess and a protrusion.

In use, the direction of back-and-forth motion may be configured to be substantially in and out of, and more preferably perpendicular, to a ground surface with which the blades interact.

The housing may have a length and a width wherein the length is greater than the width and, in use, the length of the housing may be configured to be substantially at a normal to a ground surface with which the blades interact.

In use, the head part may be configured to be positioned above the at least one blade.

A length of the elongate handle may be greater than a length of the head part.

The length of the elongate handle may be greater than a width of the head part and a height of the head part.

The at least one blade may be configured in use to move in a back-and-forth motion that is substantially perpendicular to a ground surface with which the blades interact.

A housing of the head part may further comprise: a retractable hand support on a first side of the housing; and/or a support or recesses on a second side of the housing.

In use, the head part may be configured to be positioned above the blade arrangement.

The apparatus may include a power supply, more preferably a battery.

The back-and-forth motion may be arranged in use to be substantially perpendicular to a ground surface with which the blades interact.

The back-and-forth motion may be arranged in use to be substantially parallel to an axis along a height of a user using the tilling apparatus.

The invention may include any combination of the features or limitations referred to herein, except such a combination of features as are mutually exclusive, or mutually inconsistent.

### BRIEF DESCRIPTION OF THE DRAWINGS

Preferred embodiments of the present invention will now be described, by way of example only, with reference to the accompanying diagrammatic drawings, in which:
Fig. 1 is a view of a tilling apparatus according to a first example of the invention;
Fig. 2 is an enlarged view of the tilling apparatus according to the first example without a handle attachment;
Fig. 3 shows an array of different blades for the apparatus of Figures 1 and 2;
Fig. 4 shows a blade edge of each of the corresponding blades of Fig. 3;
Fig. 5 is a schematic diagram of a first blade and a second blade from below, according to one embodiment;
Fig. 6 is a schematic diagram of a first blade and a second blade from below, according to another embodiment;
Fig.7 is a schematic diagram of a first blade and a second blade from below, according to another embodiment;
Fig. 8 is a schematic diagram of a first blade and a second blade from below, according to another embodiment;
Fig. 9 is a view of a tilling apparatus according not forming part of the invention;
Fig. 10 shows a variation of the tilling apparatus of Fig. 9;
Fig. 11 is a view of a tilling apparatus according to a second example of the invention;
Fig. 12 is a view of the tilling apparatus according to the secondr example of the invention demonstration angles of operation;
Fig. 13 is an enlarged view of the tilling apparatus according to the second example of the invention with a housing of the head part removed;
Fig. 14 shows exemplary dimensions of the tilling apparatus according to an embodiment of the invention;
Fig. 15 shows an enlarged view of an example of a blade of the tilling apparatus;
Figure 16 shows a further alternative blade design;
Figure 17 shows a yet further alternative blade design; and
Figure 18 shows an alternative means for connecting the blades to the motion mechanism.

### DETAILED DESCRIPTION

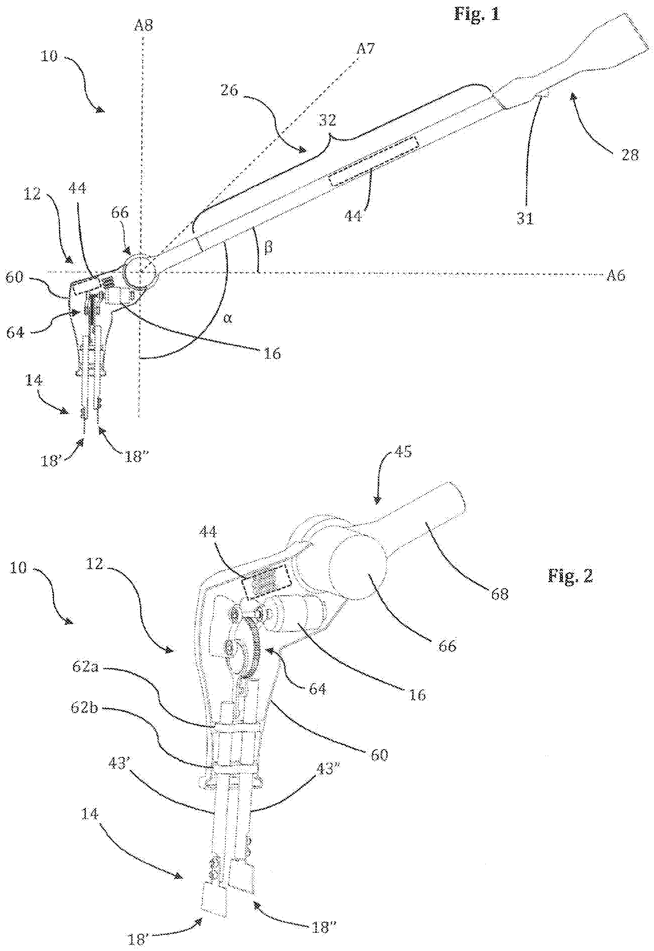

Figure 1 shows a tilling apparatus 10 according to a first example of the invention. The tilling apparatus 10 has a head part 12, a blade arrangement 14, a motor 16 and a motion mechanism 64 housed within a housing 60, and an elongate handle 26. The blade arrangement 14 has a first blade 18' and a second blade 18" configured for reciprocating back-and-forth/up-and-down motion. The elongate handle 26 has a tube portion 32 and a holding portion 28. A power switch 31 is located on the holding portion 28. Although Figure 1 shows the elongate handle having a tube portion 32, the elongate handle 26 need not be tubular. The elongate handle may be any elongate structure to provide reach for the user to use the apparatus in a standing position so long as the structure is sized and shaped such that it is positioned further away from a ground surface with which the blades interact than the blades themselves when in use.

A user holds the handle portion 28 with one or both hands and positions the blade arrangement 14 at a location within an area of the ground to be tilled. Preferably, the user grips the handle portion 28 with one hand (typically their dominant hand) and supports the tube portion 32 with their other hand. The user supports the tube portion 32 either by gripping around the circumference of the tube directly or by gripping a secondary handle (not shown) attached to the tube portion 32 (preferably substantially midway along the tube portion). The user rests the weight of the apparatus 10 on the ground through the blade arrangement 14.

The user can then actuate the apparatus by pressing the power switch 31. The user then moves the apparatus over the surface of the ground of the area to be tilled. An upward, resultant force from the ground on the blade arrangement 14 and a downward force from the weight of the apparatus allows the user to move the apparatus across the ground with minimum effort. Advantageously, the user can control actuation of the apparatus 10 whilst holding the apparatus 10 in an operating position.

Figure 1 further shows a battery 44 housed within the tube portion 32 of the elongate handle 26. This may facilitate handling of the apparatus 10 since a weight of the battery 44 is located closer to the location where the user is supporting the apparatus 10. In another example, a battery of the apparatus may be located on the head part 12. Having the battery 44 located in the head part 12 may be beneficial for increasing a weight of the head part 12 to counterbalance with the resultant force to the force of the blades being driven into the ground. In a yet further example (not shown), the apparatus may have a power cable connector for connection of a power cable connected to a mains power supply. The power cable connector may be located on the elongate handle, such as on the holding portion, or may be located on the head part. In a yet further example (not shown), the motor may be powered by an internal combustion engine, said internal combustion engine may be fuelled by petrol or diesel.

As shown in Figure 1, an axis A6 runs through a centre of the shaft 66. The axis A6 is substantially parallel to a surface that the apparatus 10 is to be used upon, for example, to a patch of earth, such as soil. Perpendicular to axis A6 is an axis A8. Axis A8 is substantially parallel to the direction of back-and-forth motion of the first and second blades 18', 18". An angle α between the axis A8 and the elongate handle is obtuse. Preferably, angle α is between 90 degrees and 135 degrees. More preferably angle α is between 110 degrees and 135 degrees. A major portion of the head part 12 extends parallel to axis A8. In some examples (not shown), the head part is directly above the blade arrangement. This arrangement ensures that a majority of the weight of the apparatus 10 is supported by the ground that the apparatus is being used upon. In some examples of the invention (not shown), the blade edges are directly below the motor and/or head part. Furthermore, the weight of the apparatus aids penetration into the ground by the blades 18', 18". An acute angle β that the elongate handle 26 makes with the axis A6 is 90 degrees or less, preferably less than 70 degrees, more preferably between 70 degrees and 45 degrees. The angle β may provide a comfortable and natural stance of operation of the apparatus and may provide reach so that the apparatus can be used to till a significant area from a distance. The user is able to stand at an edge of a flower bed and avoid treading on the area of earth which may disturb a prepared seedbed. The angles α and β may ensure the apparatus has an angle of interaction with the surface of the area to be tilled that is substantially perpendicular and that the blades are the only part of the device which make contact with the ground during use. The head part 12 is held above the blade arrangement 14 by said blade arrangement. In use, the blade arrangement 14 does not extend further forward than a front of the head part.

Figure 2 is an enlarged view of the tilling apparatus 10. Figure 2 shows a first guide 62a and a second guide 62b attached to the housing 60, a connector 45 having a sleeve 68 extending from a shaft 66 and shows that the blade arrangement 14 further comprises a first blade arm 43' and a second blade arm 43".

The first blade arm 43' connects the first blade 18' to the motion mechanism 64 and the second blade arm 43" connects the second blade 18" to the motion mechanism 64. In use, the motor 16 drives the motion mechanism 64 which moves the first and second blades 18', 18" in a back-and-forth motion with respect to the head part 12. In the example of Figure 2, the motion mechanism 64 is a driven shaft which engages with a series of connected cogs. Another example of a motion mechanism (not shown) to provide back-and-forth motion is a swashplate cam with a rotating shaft and rollers. The cogs are configured so that, when actuated, they cause the first blade arm 43' and second blade arm 43" to move translationally back-and-forth in a reciprocating manner, asynchronously with each other. In the particular example of Figure 2, the translationally back-and-forth motion is linear, in particular rectilinear, however, the translational back-and-forth motion could be curvilinear or follow a non-regular path. Furthermore, in other examples of the invention (not shown) the first and second blades move synchronously with each other or out of synchronicity with each other.

The first and second blades 18',18" are detachably connectable to the first and second blade arms 43' 43" by fasteners such as screws or pins. This allows the first and second blades 18', 18" to be removed, repaired and replaced. It may be advantageous to have removable blades: to replace the blades of one type with blades of a different structure; to sharpen the blades which may have blunted from use; or to replace broken blades with new blades.

The first and second blade arms 43',43" are partially housed within the housing 60 extending out of the housing 60. The first and second blades 18', 18" are external to the housing. The housing 60 may provide the benefit of protecting the internal components from damage, for example, from weather elements or knocks and scrapes.

The first and second blade arms 43', 43" have a length such that the first and second blades 18', 18" remain external and at a distance from the head part 12 to provide a clearance of the blades from the head part 12 at any stage of the back-and-forth motion. The back-and-forth motion of the blades 18', 18" is, thus, unimpeded by the head part 12. Furthermore, the length of the first and second blade arms 43', 43" prevent the head part 12 contacting the ground during use. This helps to keep the head part 12 clean. Where the head part 12 includes a housing as in Figure 2, the length of the first and second arms 43', 43" ensures that the housing 60 is held above the ground to prevent earth ingress into the housing 60.

The first and second guides 62a, 62b guide the direction of motion of the first and second blade arms 43', 43". In an alternative arrangement of the head part (not shown), the head part does not comprise a housing. The features of the head part are instead connected to a frame. In this arrangement, the at least one guide may be fixed to the frame.

The connector 45 is configured to connect an elongate handle and may be configured to rotatably connect the elongate handle. In particular, the connector may be configured to allow a limited degree of rotation of the elongate handle with respect to the head part as will be described further with reference to Figure 2. An axis of rotation of the shaft 66 is positioned orthogonal to the sleeve 68 and orthogonal to the direction of back-and-forth motion of the first and second blades 18', 18".

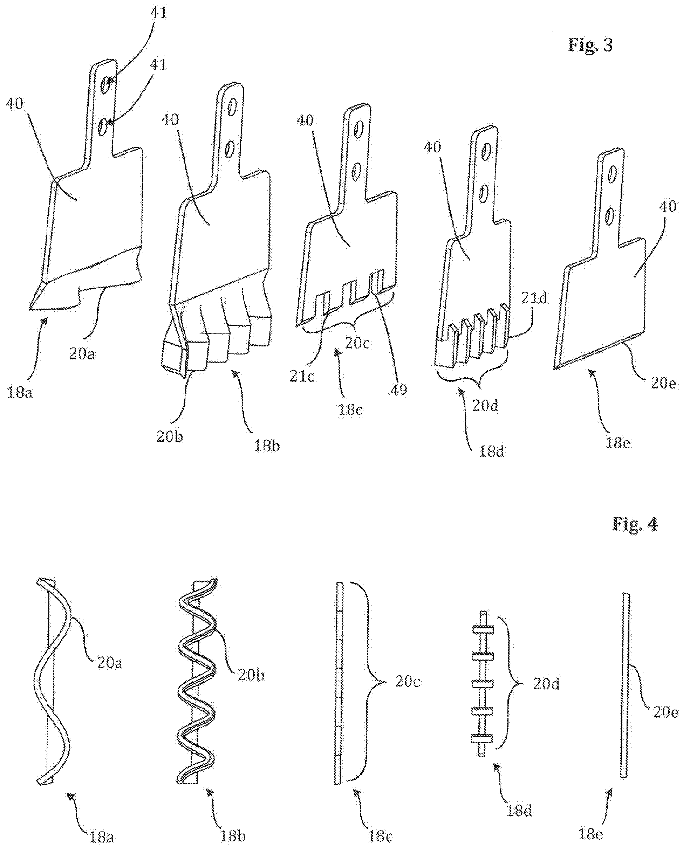

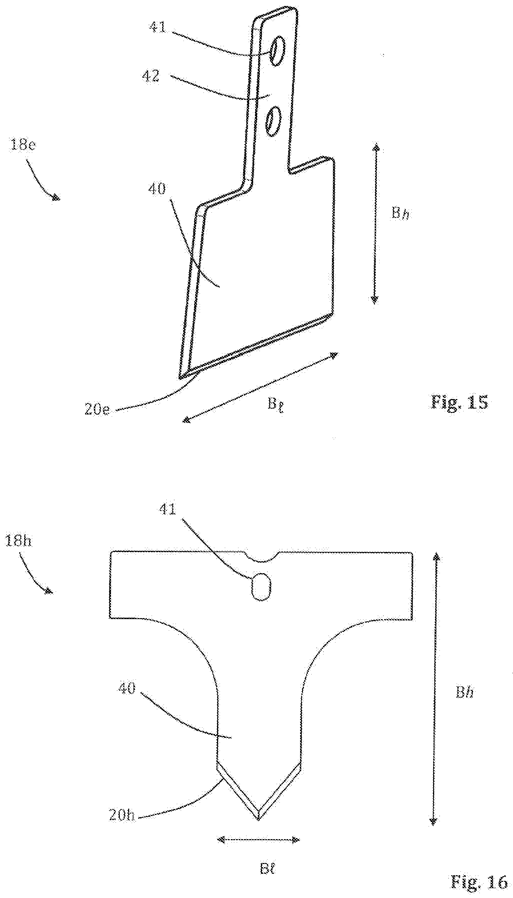

The first and second blades lie respectively in first and second planes that are substantially parallel and spaced apart. More particularly, the first and second blades 18', 18" each have a blade edge 20 and a blade face 40 (see figures 4 and 15). For at least a part of the back-and-forth motion of the blades, their faces 40 lie spaced from, and at least partly opposite to, one another. In some examples (not shown), for at least a part of the back-and-forth motion of the blades, only a portion of the each of the blade faces 40 lies spaced from, and at least partly opposite to, one another. Thus, a gap is provided between the blade faces 18', 18". During use, the gap is partially filled with earth. This arrangement is particularly effective in breaking up compact earth.

The structure, position and orientation of the blade arrangement described above results in effective tilling of an area of earth. It may also result in aerating the earth, levelling the surface, loosening weed roots from the earth (which can then be removed from the tilled area by hand), and attaining soft earth.

The arrangement of the blades in Figure 2 shows the first blade 18' lying in a plane parallel to a plane in which the second blade 18" lies. The planes need not be exactly parallel. However, the planes in which the blades lie must be separated by a distance along the normal of one of the planes. The blades 18', 18" may have a sharpened edge to facilitate penetration of the earth. In use, the first blade 18' and the second blade 18" are alternately driven into the ground. The rate of reciprocation of the first and second blades 18', 18" may be around several reciprocations per second. When the first blade 18' is driven into the earth and retracted a clump of earth may be extracted from the ground and deposited in the path of the second blade 18". The second blade 18" is then driven into the earth and may drive through the deposited clump to further break apart and disrupt the earth. In use, the head part 12 is directly above the blade arrangement 14 such that a weight of the head part is supported by the blade arrangement 14 which is in turn supported by a resultant force from the ground. A downward force from the weight of the head part 12 is countered by an upward reaction force from the ground on the blades. This gives a floating-type sensation when using the apparatus 10.

Figure 3 shows an array of different blades 18a to 18e and Figure 4 shows a blade edge 20a to 20e of each of the corresponding blades 18a to 18e of Figure 3. The first alternative blade 18a in the array of different blades has a fluted blade edge 20a. The second alternative blade 18b in the array of different blades also has a fluted blade edge 20b but with the ridges closer together. The third alternative blade 18c in the array of different blades has a stepped blade edge 20c to provide a fork-like blade having a plurality of tines 21c. Edge portions 49 between neighbouring tines 21c may also serve as part of the blade edge 20c depending on the length of the tines 21c and the portion of the blade 18 which digs into the earth during use. The fourth alternative blade 18d in the array of different blades has an array of teeth 21d each having a blade edge 20d, the array of teeth 21d are turned inwards from an upper blade portion of the blade 18d. The last blade 18e in the array of different blades is the blade depicted in Figures 1 and 2 and has a blade edge 18e. The blade edge 18e is straight and sharpened. All the blades 18a to 18e have apertures 41 to fix the blade onto their respective blade arm. All the blades 18a to 18e in Figure 3 lead to effective tilling of earth and, in particular, lead to aeration of the earth, dislodging of weeds and/or levelling the surface to attain soft earth suitable for planting. A blade can be selected based on the condition of the earth to be tilled and the resultant texture of the earth desired. For example, blade 18e may be the most effective on clay-like earth whereas blade 18b may be a better selection for dry, powdery earth.

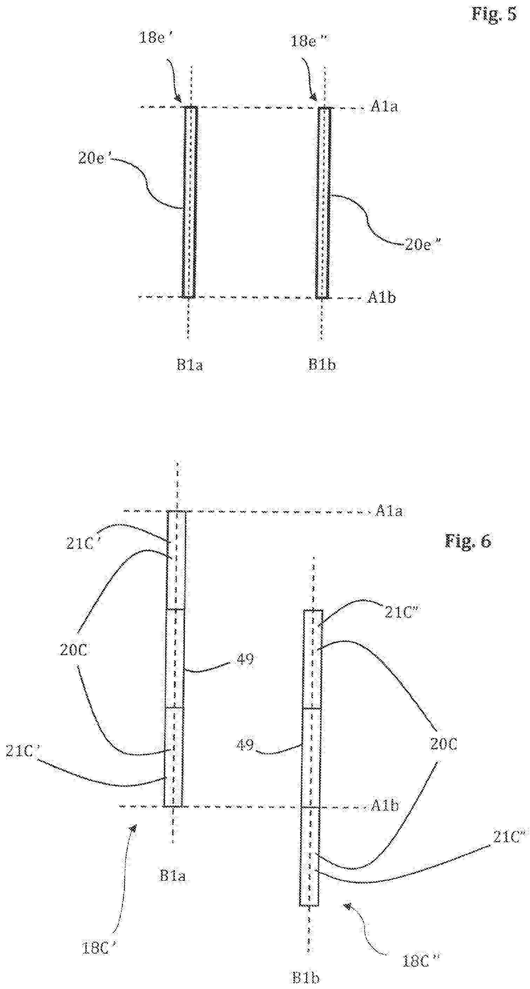

Figure 5 shows an underside of the first blade 18e' and the second blade 18e" of figures 1 and 2, and their position when attached to the tilling apparatus of the invention. The blade edge 20e' of the first blade 18e' is shown and is the part of the first blade 18e' which penetrates the earth first. Similarly, the blade edge 20e" of the second blade 18e" is shown and is the part of the second blade which penetrates the earth first. As shown in Figure 5, the first blade 18e' may be aligned such that a first and a second side of the first blade is in line with a first and a second side of the second blade. A line A1a from the first side of the first blade 18e' to the first side of the second blade 18e" is parallel to a line A1b from the second side of the first blade 18e' to the second side of the second blade 18e''. A line B1a extending along the blade edge 20e' of the first blade 18e' is parallel to a line B1b extending along the blade edge 20e" of the second blade 18e". Thus, the first and second blade edges 20e', 20e'' are parallel and their sides aligned. Blade edges 20e', 20e" may be sharpened edges.

Figure 6 shows another example blade 18C. Blade 18C is similar to blade 18c in that it has a stepped blade edge 20C to provide a fork-like blade having a plurality of tines 21C and edge portions 49 between neighbouring tines 21C. With reference to Figure 6, an underside of a first blade 18C' and a second blade 18C" having a staggered position with respect to each other when attached to the tilling apparatus is shown. A first and a second side of the first blade 18C' is not in line with a first and a second side of the second blade 18C''. The blades only partially overlap in an area defined by axes A1a, A1b, B1a, and B1b. One of the portions 21C' on the first blade 18C' aligns with an edge portion 49 of the second blade 18C and vice versa. A line B1a extending along the blade edge 20C' of the first blade 18C' is parallel to a line B1b extending along the blade edge 20C'' of the second blade 18C''. Thus, the first and second blade edges 20C', 20C'' are parallel.

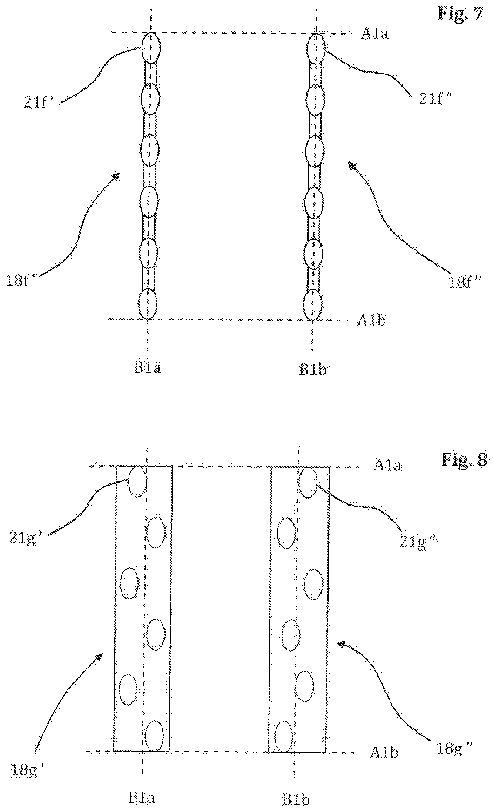

Figure 7 is a schematic diagram of a view of the underside of another pair of blades 18f' and 18f" wherein the blades 18f have a plurality of first blade edge portions 21f' and a plurality of second blade edge portions 21f", respectively.

Figure 8 is a schematic diagram of a view of the underside of another pair of blades 18g' and 18g" wherein the blades 18g have a plurality of first blade edge portions 21g' and a plurality of second blade edge portions 21g", respectively, wherein the blade edge portions 21g', 21g" are alternately offset so as to form two rows of blade edge portions 21g.

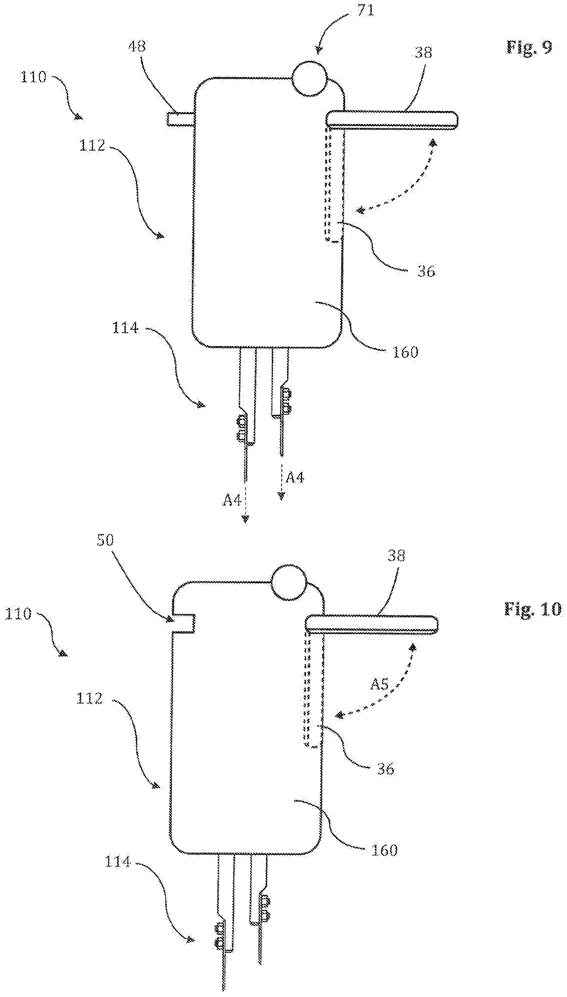

Figure 9 shows a tilling apparatus 110 not forming part of the present invention. The tilling apparatus 110 has a head part 112, a blade arrangement 114, a housing 160, and an elongate handle connector 71. The blade arrangement 114 may be any of, of have any of the variations of, the blade arrangements as described in the first example of the invention. In this example of the invention the head part 112 is configured to serve as a handle for the apparatus. The head part is configured to be held comfortably and securely is a user's hand. In particular, the housing 160 is sized and shaped to be comfortably held in a user's hand. The housing 160 incorporates ergonomic features which may increase the comfort and stability of the apparatus in a user's hand. In the example of Figure 9, the ergonomic features are a retractable arm 38 and a protrusion 48, preferably a thumb support, which can be supported on top of a user's hand. The housing 160 has a recess 36 in which the retractable arm 38 can be folded down and stowed inside. When the retractable arm 38 is in its stowed position, it may be substantially flush with the housing 160. This prevents the retractable arm 38 catching on objects when in the stowed position. The retractable arm 38 may retract to a position which is substantially perpendicular to the direction of back-and-forth motion of the blades. The retractable arm may be stowed into the recess, for example via a rotation mechanism or a slide mechanism. The retractable arm 38 is shorter than the elongate handle 26 described in Figure 1.

Figure 10 shows a variation of the tilling apparatus 110 not forming part of the present invention. The tilling apparatus 110 in Figure 10 has a housing 260 comprising a notch 50. The notch 50 in the housing 260 replaces the protrusion 48 in the housing 160 to provide one of the ergonomic features to be supported by a user's hand when they are using the tilling apparatus in a handheld mode.

The protrusion 48 in Figure 9 or the notch 50 in Figure 10 is opposite to the retractable arm 38 on the head part 112.

The tilling apparatus 110 in Figure 9 and Figure 10 is an adaptable tilling apparatus. When the retractable arm 38 is in the retracted position and there is no elongate handle connected to the elongate handle connector 71, the tilling apparatus 110 is in a close hand-held mode. In this mode the user holds the apparatus directly around the head part 112. This mode may be used for precise tilling. The retractable arm 38 can be stowed and an elongate handle attached at the elongate handle connector 71 to switch from close handheld mode to an extended handheld mode. In extended mode, the user can stand upright and at a distance from the area to be tilled whilst operating the apparatus. This can be desirable for a larger tilling area, more comfortable, in particular for a user's back, and avoid the user having to crouch or kneel whilst using the apparatus. In extended mode the user can stand at the edge of a flower bed and thus avoid stepping onto the earth, keeping the user clean and the earth untrodden. Thus, the adaptable tilling apparatus 110 is a two-in-one apparatus that can be used both for medium sized areas of earth and for precision tilling.

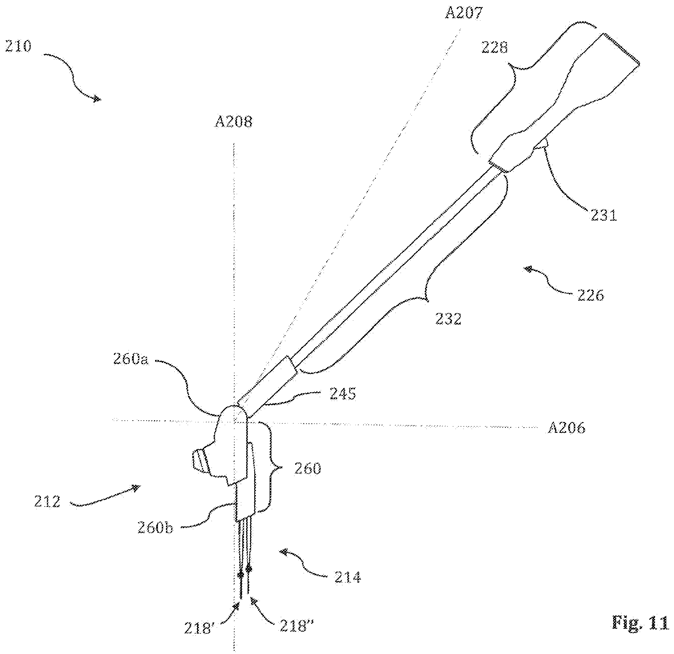

Figure 11 shows a tilling apparatus 210 according to a second example of the invention. Tilling apparatus 210 has a head part 212, a blade arrangement 214, a motor (not shown) and an elongate handle 226. The blade arrangement 214 has a first blade 218' and a second blade 218". The head portion 212 has a housing 260 wherein the housing has a first part 260a and a second part 260b. The first part 260a of the housing houses the motor and the point of connection between the elongate handle 226 and the head part 212. The second part 260b of the housing houses a mechanism to provide the back-and-forth motion of the blades. The elongate handle 226 has a tube portion 232 and a holding portion 228. A power switch 231 is located on the holding portion 228. A user can control actuation of the apparatus 210 whilst supporting the apparatus for tilling. The apparatus may be powered by a battery (not shown) housed within the elongate handle or the head part or may be connected to a mains power via a power lead (not shown).

In the examples described above, the motor is described as housed within the head part. However, in other examples (not shown) of the tilling apparatus, the motor may be located within the elongate handle, attached onto the elongate handle or onto the head part. In yet further examples (not shown) of the tilling apparatus there may be a plurality of motors which may be located within the elongate handle, attached to the elongate handle, within the head part and/or attached onto the head part. The first blade may be driven by a first motor and the second blade may be driven by a second motor.

The elongate handle of the tilling apparatus may have a further secondary handle portion (not shown) positioned part way along the tube portion. This secondary handle portion may aid the user to hold the apparatus above the ground.

In some examples of the tilling apparatus (not shown), the battery may be located within the head part, attached onto the elongate handle, or attached onto the head part. In yet further examples (not shown) of the tilling apparatus according to the first and second example of the invention they may be a plurality of batteries which may be located within the elongate handle, attached to the elongate handle, within the head part and/or attached onto the head part. The battery or batteries may be removable and/or rechargeable.

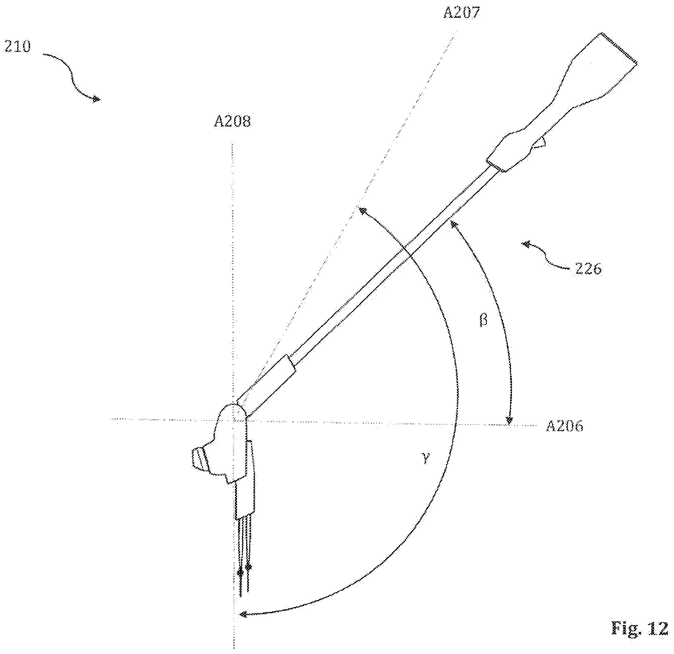

With further reference to Figures 11 and 12, an axis A206 runs through the point of connection between the elongate handle and the head part 12. The axis A206 is substantially parallel to a surface that the apparatus 210 would be used upon, for example, to a patch of earth. Perpendicular to axis A206 is an axis A208. Axis A208 is substantially parallel to the direction of back-and-forth motion of the first and second blades 218', 218". An angle between the axis A208 and the elongate handle is obtuse. A major portion of the head part 212 extends parallel to axis A208. The head part is further away from a ground surface with which the blades interact than the blade arrangement. This arrangement ensures that a majority of the weight of the apparatus is supported by the ground that the apparatus is being used upon. Furthermore, the weight of the apparatus aids penetration into the ground by the blades. The angle of the elongate handle also provides a comfortable and natural stance for the user of the apparatus and provides reach so that the apparatus can be used to till a significant area from a distance. For example, the user can stand on an edge of a flower bed to avoid disturbing the earth by standing on it and to avoid getting dirt on their person. The arrangement ensures the apparatus has an angle of interaction with the surface of the area to be tilled that is substantially perpendicular.

Figure 12 is a view of the tilling apparatus 210 according to the second example of the invention showing an obtuse angle γ between axis A208 and A207 and an acute angle β between axis A206 and the elongate handle 226.

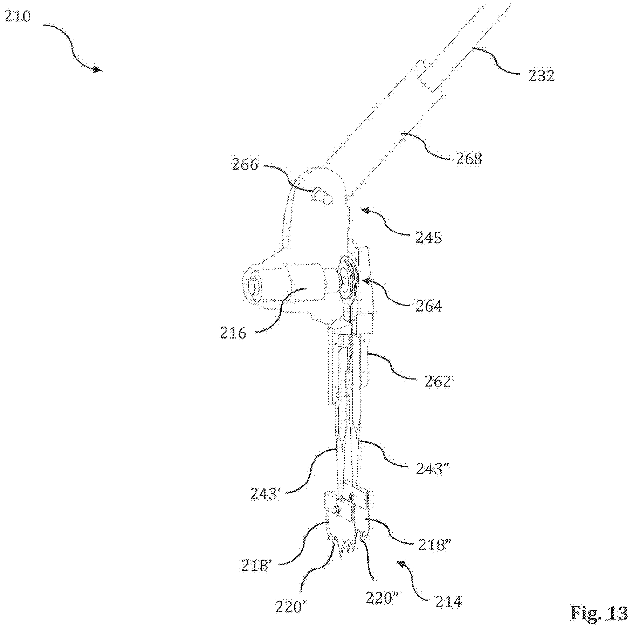

Figure 13 is an enlarged view of part of the tilling apparatus 210 according to the second example of the invention with the housing 260 of the head part 212 removed. The tilling apparatus has a first blade 218' and a second blade 218" connected to respective first and second blade arms 243', 243". The first and second blade arms 243', 233' are movably supported in a guide 262 which guides an up and down/back-and-forth motion of the blade arms 243', 243" and blades 218', 218". The blade arms 243', 243" are connected to a motion mechanism 264 which, when driven by a motor 216, drives the blade arms, and blades, in a back-and-forth motion. Along a length of the apparatus 210 the elongated handle extends behind the motion mechanism which extends behind the blade arms which themselves extend behind the blades such that, in use, the blades, and potentially a portion of the blade arms, are the only elements of the apparatus which make contact with the ground. Figure 13 demonstrates that a driving mechanism in the form of a motion mechanism and a motor extend longitudinally beyond the blade arrangement away from the ground. The motion mechanism may be as previously described. The blades 218', 218" have serrated blade edges 220' 220".

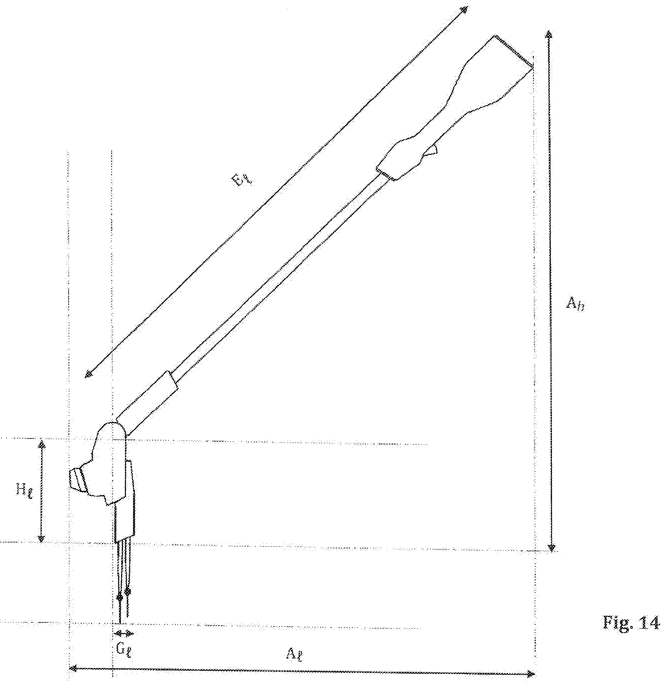

Figure 14 shows exemplary dimensions of the tilling apparatus 10, 210. The apparatus 10, 210 has a height Aₕ and a length Aₗ. The apparatus height Aₕ is around 500mm to 3000mm, preferably 1000mm to 2000mm, more preferably 1300mm to 1500mm. The apparatus length Aₗ is around 500mm to 1500mm, preferably 500mm to 1000mm, more preferably 700mm to 900mm. A length of the elongate handle Eₗ is around 500mm to 1500, preferably 700mm to 1300mm, more preferably 1100mm to 1300mm. A height of the head part Hₗ is around 150mm to 500mm, preferably 200mm to 400mm, more preferably 200mm to 300mm. The length of the elongate handle is greater than the length of the head part, the width of the head part, and the height of the head part. A gap Gₗ between the blades is around 5mm to 100mm, preferably 15mm to 50mm, more preferably 20mm to 30mm.

Figure 15 shows an enlarged view of the blade 18e of the tilling apparatus. Blade 18e has a blade face 40, blade edge 20e, and a neck portion 42 having apertures 41 to attach the blade to the tilling apparatus. The blade face 40 has a blade height Bₕ and a blade length Bₗ. The blade height Bₕ is around 20mm to 150mm, preferably 30mm to 100mm, more preferably 35mm to 45mm. The blade length Bₗ is around 30mm to 150mm, preferably 50mm to 100mm, more preferably 65mm to 75mm. The blades are general elongate in shape, in the example of figure 15 the blades are generally rectangular in shape.

Figure 16 shows a further alternative blade design 18h. Blade 18h has an arrow shaped blade edge 20h and a T-shaped blade face 40. The blade face 40 has a height Bₕ of around 60mm to 100mm, preferably 80mm. The blade edge 20h has a length Bₗ of around 15mm to 35 mm, preferably 25mm.

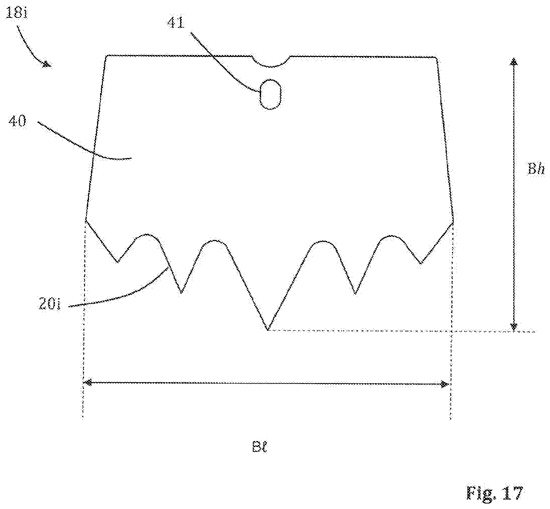

Figure 17 shows a yet further alternative blade design 18i. Blade 18i has a serrated blade edge 20i. The blade face 40 has a height Bₕ of around 60mm to 100mm, preferably 80mm. The blade edge 20i has a length Bₗ of around 80mm to 120mm, preferably 100mm.

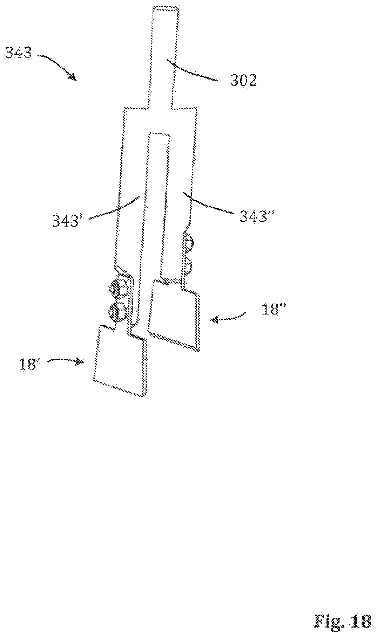

Figure 18 shows an alternative means for connecting the blades to the motion mechanism. In this example, the first blade arm 343' and the second blade arm 343" are formed from a single element 343. The single element 343 having a neck portion 302 bifurcating into the first and second blade arms 343', 343". The neck portion 302 is connected to the motion mechanism. The first and second blades 18', 18" are joined by a yoke and move synchronously with each other.

In use for tilling, the blades may penetrate the earth to a depth of around 20mm to 50mm, preferably 40mm. The head part may remain around 100mm to 200mm above the earth at all times during use. Thus, the head part feels to the user as though it "hovers" above the earth. The apparatus may also be used to dig deeper into the earth, for example up to around 300mm, to prepare the ground for bedding plants. This may be achieved by repeated passes of the apparatus over a particular area of the ground surface. A further use of the apparatus is to repair patches of grass such as lawn that are balding. The apparatus is passed over the bald patch to lightly break up the surface. A resulting good quality texture of the earth can then be mixed with the grass seed. A user can finally pat down the mixed earth by hand to level the surface.

The tilling apparatus of the invention described herein may work best in conditions where the soil is not too dry or too wet. Since the tilling apparatus of the invention described herein is compact and light, a user may easily manoeuvre the apparatus under and around plants to prevent damage to said plants.

The tilling apparatus of the invention may be used to break up earth into a fine consistency. Hard earth such as clay, may take longer to break up and may leave a coarser finish after tilling with the apparatus. Hitting a hard element in the earth, such as stones or roots, results in minimal shock through the apparatus to the user, as a result, in part, of the obtuse angle between the elongate handle and the direction of back-and-forth motion. When the blade arrangement encounters a hard element in the earth, the blade arrangement may bounce generally upwards and away from said hard element. This prevents the apparatus from jolting when it hits said hard elements which minimise discomfort for the user. The tilling apparatus may also rip through weed roots which may kill said weeds. Any weed debris on the surface of the tilled soil may then be raked away or picked up by hand. Tilling using the apparatus of the invention results in a neat and tidy area of tilled earth. The apparatus is lightweight such that its weight can be support by the blade arrangement resting of the ground and a user can support the device with one, but preferably both, hands.

The head part may be termed a head. The blade edge may comprise a cutting surface or a cutting surface arrangement. As, for at least a part of the back-and-forth motion of the blades, the blade faces lie spaced from, and at least partly opposite to, one another this may be described as an opposingly facing arrangement of the cutting surface or the cutting surface arrangement wherein there is a gap between the cutting surface or the cutting surface arrangement. Repeated back and forth motion may be up-and-down motion. The elongate handle may be an elongate body. The tines and teeth may be cutting surface portions. The direction of back-and-forth motion may be a pointing direction. The fluted blade edge may be a curvy or wavy cutting surface. The stepped blade edge may be termed a castellated cutting surface. The blade having an array of turned inwards from an upper blade portion may be a cutting surface arrangement having a track or plurality of tracks. The retractable arm may comprise a handle arrangement.

Although, for several embodiments described above, the motion of the blades is said to be reciprocating, the blades may alternatively, or in addition, be arranged to move together, in-phase, out-of-phase, in synchronisation or independently.

## Claims

1. A hand-held tilling apparatus (10) for tilling earth, the tilling apparatus comprising:
at least two driven tilling blades (18', 18"), each comprising a blade edge (20) and a blade face (40);
at least one motor (16) for driving the blades in repeated, linear back-and-forth motion, and an elongate handle (26);
wherein, for at least a part of the back-and-forth motion of the blades, their faces lie spaced from, and at least partly opposed to, one another,
**characterised in that**
an angle (α) between the elongate handle and the direction of back and forth motion of the at least two blades is obtuse.

2. The apparatus of Claim 1, wherein:
a height and a length of one of the blades (18', 18") defines a first plane, wherein the direction of motion of the blade lies in the first plane;
a height and a length of another of the blades defines a second plane, wherein the direction of motion of the blade lies in the second plane; and
the first plane is separated from the second plane by a distance along a normal to the first and/or second plane.

3. The apparatus of Claim 1 or 2, wherein, in use, the motor (16) is configured to be positioned further away from a ground surface with which the blades (18', 18") interact than the at least two blades.

4. The apparatus of any of Claims 1 to 3, wherein the back-and-forth motion of one of the blades (18', 18") is reciprocating with the back-and-forth motion of another of the blades (18', 18").

5. The apparatus of any preceding claim, wherein the face (40) of one of the blades (18', 18") is substantially parallel to the face of another of the blades (18', 18").

6. The apparatus of any preceding claim, wherein the at least two blades (18', 18") are substantially planar.

7. The apparatus of any of Claims 1-6, wherein the elongate handle (26) houses the motor (16) and/or a battery (44).

8. The apparatus of any preceding claim, further comprising a housing (160), the housing further comprising at least one of:
a retractable arm (38);
a recess (36); and
a protrusion (48).

9. The apparatus of any preceding claim, wherein, in use, the direction of back-and-forth motion is configured to be substantially perpendicular to a ground surface with which the blades (18', 18") interact.

10. A method of tilling a ground surface using a tilling apparatus (10) according to any of Claims 1-9 , the method comprising:
activating the motor such that the blades (18', 18") move in a back-and-forth motion;
**characterised by** a portion of a weight of the apparatus is supported by the ground surface and said portion of the weight of the apparatus provides a force to enable the blades to penetrate the ground surface.

11. The method of claim 10, wherein the back-and-forth motion is arranged in use to be perpendicular to a ground surface with which the blades (18', 18") interact.

12. The method of claim 10 or 11, wherein the back-and-forth motion is arranged in use to be parallel to an axis along a height of a user using the tilling apparatus (10).

## Patentansprüche

1. Bearbeitungshandgerät (10) zum Bearbeiten von Erde, wobei das Bearbeitungsgerät Folgendes umfasst:
mindestens zwei angetriebene Bearbeitungsmesser (18', 18"), die jeweils eine Messerkante (20) und eine Messerfläche (40) umfassen;
mindestens einen Motor (16) zum Antreiben der Messer in wiederholter linearer Hin- und Herbewegung und einen länglichen Griff (26);
wobei für mindestens einen Teil der Hin- und Herbewegung der Messer ihre Flächen voneinander beabstandet sind und mindestens teilweise einander gegenüber liegen,
**dadurch gekennzeichnet, dass** ein Winkel (α) zwischen dem länglichen Griff und der Richtung der Hin- und Herbewegung der mindestens zwei Messer stumpf ist.

2. Gerät nach Anspruch 1, wobei:
eine Höhe und eine Länge eines der Messer (18', 18") eine erste Ebene definiert, wobei die Bewegungsrichtung des Messers in der ersten Ebene liegt;
eine Höhe und eine Länge eines anderen der Messer eine zweite Ebene definiert, wobei die Bewegungsrichtung des Messers in der zweiten Ebene liegt; und
die erste Ebene von der zweiten Ebene durch einen Abstand entlang einer Normalen zu der ersten und/oder der zweiten Ebene getrennt ist.

3. Gerät nach Anspruch 1 oder 2, wobei der Motor (16) dazu konfiguriert ist, bei Verwendung weiter weg von einer Bodenoberfläche, mit der die Messer (18', 18") interagieren, als die mindestens zwei Messer positioniert zu sein.

4. Gerät nach einem der Ansprüche 1 bis 3, wobei die Hin- und Herbewegung eines der Messer (18', 18") mit der Hin- und Herbewegung eines anderen der Messer (18', 18") in Wechselbeziehung steht.

5. Gerät nach einem vorhergehenden Anspruch, wobei die Fläche (40) eines der Messer (18', 18") im Wesentlichen parallel zu der Fläche eines anderen der Messer (18', 18") ist.

6. Gerät nach einem vorhergehenden Anspruch, wobei die mindestens zwei Messer (18', 18") im Wesentlichen plan sind.

7. Gerät nach einem der Ansprüche 1-6, wobei der längliche Griff (26) den Motor (16) und/oder eine Batterie (44) aufnimmt.

8. Gerät nach einem vorhergehenden Anspruch, ferner umfassend ein Gehäuse (160), wobei das Gehäuse ferner mindestens eines von Folgenden umfasst:
einen einziehbaren Arm (38);
eine Aussparung (36); und
einen Vorsprung (48).

9. Gerät nach einem vorhergehenden Anspruch, wobei die Richtung der Hin- und Herbewegung bei Verwendung dazu konfiguriert ist, im Wesentlichen senkrecht zu einer Bodenoberfläche zu sein, mit der die Messer (18', 18") interagieren.

10. Verfahren zum Bearbeiten einer Bodenoberfläche unter Verwendung eines Bearbeitungsgeräts (10) nach einem der Ansprüche 1-9, wobei das Verfahren Folgendes umfasst: Aktivieren des Motors, sodass sich die Messer (18', 18") in einer Hin- und Herbewegung bewegen; **dadurch gekennzeichnet, dass** ein Teil eines Gewichts des Geräts durch die Bodenoberfläche gestützt wird und der Teil des Gewichts des Geräts eine Kraft bereitstellt, um es den Messern zu ermöglichen, die Bodenoberfläche zu durchdringen.

11. Verfahren nach Anspruch 10, wobei die Hin- und Herbewegung bei Verwendung so angeordnet ist, dass sie senkrecht zu einer Bodenoberfläche ist, mit der die Messer (18', 18") interagieren.

12. Verfahren nach Anspruch 10 oder 11, wobei die Hin- und Herbewegung bei Verwendung so angeordnet ist, dass sie parallel zu einer Achse entlang einer Höhe eines Benutzers ist, der das Bearbeitungsgerät (10) verwendet.

## Revendications

1. Appareil de travail à main (10) pour travailler le sol, l'appareil de travail comprenant :
au moins deux lames de travail (18', 18") entraînées, chacune comprenant une arête de lame (20) et une face de lame (40) ;
au moins un moteur (16) pour entraîner les lames dans un déplacement de va-et-vient linéaire répété, et une poignée allongée (26) ;
pendant au moins une partie du déplacement de va-et-vient des lames, leurs faces étant espacées les unes des autres et au moins en partie mutuellement opposées, l'appareil étant **caractérisé en ce qu'**un angle (α) entre le manche allongé et la direction du déplacement de va-et-vient des au moins deux lames est obtus.

2. Appareil selon la revendication 1,
une hauteur et une longueur de l'une des lames (18', 18") définissant un premier plan, la direction de déplacement de la lame se trouvant dans le premier plan ;
une hauteur et une longueur d'une autre des lames définissant un second plan, la direction de déplacement de la lame se trouvant dans le second plan ; et
ledit premier plan étant séparé dudit second plan d'une distance le long d'une normale au premier et/ou au second plan.

3. Appareil selon la revendication 1 ou 2, lors de l'utilisation, ledit moteur (16) étant configuré pour être positionné plus loin d'une surface au sol avec laquelle les lames (18', 18") interagissent que les au moins deux lames.

4. Appareil selon l'une quelconque des revendications 1 à 3, ledit déplacement de va-et-vient d'une des lames (18', 18") alternant avec ledit déplacement de va-et-vient d'une autre des lames (18', 18").

5. Appareil selon l'une quelconque des revendications précédentes, ladite face (40) d'une des lames (18', 18' ') étant sensiblement parallèle à ladite face d'une autre des lames (18', 18").

6. Appareil selon l'une quelconque des revendications précédentes, lesdites au moins deux lames (18', 18") étant sensiblement planes.

7. Appareil selon l'une quelconque des revendications 1 à 6, ladite poignée allongée (26) logeant le moteur (16) et/ou une batterie (44).

8. Appareil selon l'une quelconque des revendications précédentes, comprenant en outre un boîtier (160), le boîtier comprenant en outre au moins l'un des éléments suivants :
un bras rétractable (38) ;
un évidement (36) ; et
une saillie (48).

9. Appareil selon l'une quelconque des revendications précédentes, lors de l'utilisation, ladite direction du mouvement de va-et-vient étant configurée pour être sensiblement perpendiculaire à une surface au sol avec laquelle les lames (18', 18") interagissent.

10. Procédé de travail d'une surface au sol au moyen d'un appareil de travail (10) selon l'une quelconque des revendications 1 à 9, le procédé comprenant :
l'activation du moteur de sorte que les lames (18', 18") se déplacent selon un mouvement de va-et-vient ; le procédé étant **caractérisé en ce qu'**une partie d'un poids de l'appareil est supportée par la surface au sol et ladite partie du poids de l'appareil fournit une force permettant aux lames de pénétrer la surface au sol.

11. Procédé selon la revendication 10, ledit déplacement de va-et-vient étant conçu, lors de l'utilisation, pour être perpendiculaire à une surface au sol avec laquelle les lames (18', 18") interagissent.

12. Procédé selon la revendication 10 ou 11, le déplacement de va-et-vient étant conçu, lors de l'utilisation, pour être parallèle à un axe le long d'une hauteur d'un utilisateur utilisant l'appareil de travail (10).
